# EUROPÄISCHE PATENTSCHRIFT

(11) **EP 1 741 512 B1**
(45) Veröffentlichungstag und Bekanntmachung des Hinweises auf die Patenterteilung: **19.03.2008**
(21) Anmeldenummer: 06009487.7
(22) Anmeldetag: 09.05.2006
(51) Int. Cl.: B23Q 5/04, B23Q 1/54

(54) **Verstellbares Werkzeugaggregat**
Adjustable tool-head
Tête d'outil réglable

(30) Priorität: 04.07.2005 DE 102005032487
(43) Veröffentlichungstag der Anmeldung: 10.01.2007
(73) Patentinhaber: REICH SPEZIALMASCHINEN GmbH, 72622 Nürtingen (DE)
(72) Erfinder: Bührer, Armin, 77716 Haslach (DE); Hörig, Stefan, 77704 Oberkirch (DE)
(74) Vertreter: Hoeger, Stellrecht & Partner Patentanwälte

(56) Entgegenhaltungen:
- EP-A- 1 316 385
- DE-B3-8102004 062 13
- FR-A- 2 552 002

## Beschreibung

Die Erfindung betrifft ein einwechselbares Werkzeugaggregat zur Anordnung an der Spindel einer Werkzeugmaschine, mit einem koaxial zur Spindelachse rotierbaren Trägerteil, an dem eine Werkzeugaufnahme um eine senkrecht zur Spindelachse ausgerichtete Schwenkachse verschwenkbar gelagert ist, und mit einer Schwenkmechanik, die mit der Werkzeugaufnahme verbunden ist zum Verschwenken der Werkzeugaufnahme (siehe z.B. Dokument EP 1 316 385).

Derartige Werkzeugaggregate können an der Spindel beispielsweise einer Holzbearbeitungsmaschine angeordnet werden, um mit ihrer Hilfe ein Werkstück beispielsweise zu bohren oder zu fräsen oder zur Vornahme eines Sägeschnittes.

Soll in ein Werkstück eine Schrägbohrung eingebracht werden oder sollen Gehrungsschnitte vorgenommen werden, so ist es erforderlich, das Werkzeug schräg zur Spindelachse auszurichten. Hierzu weist das Werkzeugaggregat eine Schwenkmechanik auf, die mit der Werkzeugaufnahme gekoppelt ist, so daß letztere um eine senkrecht zur Spindelachse ausgerichtete Schwenkachse verschwenkt werden kann. Außerdem kann das Werkzeug auch in einer Schrägstellung um die Spindelachse rotiert werden. Hierzu kommt das koaxial zur Spindelachse rotierbare Trägerteil zum Einsatz, an dem die Werkzeugaufnahme gelagert ist. Ein derartiges Werkzeugaggregat ist aus der DE 101 58 898 C1 bekannt. Darin wird vorgeschlagen, das Werkzeugaggregat mit einem Verstellteil zu versehen, das wahlweise mit dem Trägerteil oder mit einem Maschinenteil der Werkzeugmaschine drehfest verbindbar ist. Zur Herstellung der drehfesten Verbindung mit dem Maschinenteil kommt ein Fixierbolzen zum Einsatz, der in eine Aufnahme des Maschinenteils eingeführt werden kann. In diesem Zustand stellt sich bei einer Rotation des Trägerteils eine Relativbewegung zwischen dem Trägerteil und dem drehfest am Maschinenteil gehaltenen Verstellteil ein, und diese Relativbewegung wird von einem Getriebe des Werkzeugaggregates in eine Verschwenkbewegung der Werkzeugaufnahme übersetzt. Soll lediglich eine Rotation der Werkzeugaufnahme um die Spindelachse erfolgen, so wird der Fixierbolzen aus der Aufnahme des Maschinenteils herausgenommen, so daß bei einer Rotation des Trägerteils auch das Verstellteil eine entsprechende Rotationsbewegung ausführt. Soll anschließend erneut eine Verschwenkbewegung der Werkzeugaufnahme erfolgen, so muß in einem ersten Schritt das Trägerteil zusammen mit dem Verstellteil wieder in eine Position zurückgeführt werden, in der der Fixierbolzen mit der Aufnahme des Maschinenteils fluchtet, und danach muß der Fixierbolzen in die Aufnahme eingeführt werden, so daß sich anschließend bei einer Rotation des Trägerteils eine Relativbewegung zwischen dem Verstellteil und dem Trägerteil einstellt. Die Handhabung des bekannten Werkzeugaggregats zum Verschwenken der Werkzeugaufnahme ist daher aufwendig.

Aufgabe der vorliegenden Erfindung ist es, ein Werkzeugaggregat der eingangs genannten Art derart weiterzubilden, daß es eine vereinfachte Handhabung aufweist.

Diese Aufgabe wird bei einem Werkzeugaggregat der gattungsgemäßen Art erfindungsgemäß dadurch gelöst, daß die Schwenkmechanik ein Drehteil aufweist, das um eine parallel zur Spindelachse ausgerichtete Drehachse drehbar gelagert und über ein Getriebe mit der Werkzeugaufnahme gekoppelt ist, wobei das Drehteil mit einem Maschinenteil der Werkzeugmaschine verbindbar und durch eine Relativbewegung zwischen dem Trägerteil und dem Maschinenteil um seine Drehachse in Drehung versetzbar ist.

In die Erfindung fließt der Gedanke mit ein, daß eine Schwenkbewegung der Werkzeugaufnahme auf konstruktiv einfache Weise dadurch erzielt werden kann, daß ein Drehteil, das um eine parallel zur Spindelachse ausgerichtete Drehachse drehbar gelagert ist, mit einem Maschinenteil der Werkzeugmaschine verbunden wird und dann durch eine Relativbewegung zwischen dem Maschinenteil und dem Trägerteil das Drehteil um seine Drehachse in Drehung versetzt wird. Diese Drehbewegung wird über das Getriebe auf die Werkzeugaufnahme übertragen, so daß diese um die senkrecht zur Spindelachse ausgerichtete Schwenkachse verschwenkt wird. Allenfalls beim Anordnen des Werkzeugaggregats an der Spindel der Werkzeugmaschine muß beim erfindungsgemäßen Werkzeugaggregat eine Ausrichtung des Drehteils relativ zum Maschinenteil erfolgen, es kann dann allerdings praktisch in jeder beliebigen Drehstellung des Trägerteils die Werkzeugaufnahme verschwenkt werden, ohne daß es hierzu jeweils erforderlich ist, das Drehteil erneut relativ zum Maschinenteil auszurichten. Das erfindungsgemäße Werkzeugaggregat zeichnet sich daher durch eine vereinfachte Handhabung beim Verschwenken der Werkzeugaufnahme aus.

Es kann vorgesehen sein, daß das Drehteil an einem Lagerteil gelagert ist, das relativ zum Trägerteil verdrehbar ist. Von besonderem Vorteil im Hinblick auf eine einfache Konstruktion ist es jedoch, wenn das Drehteil am Trägerteil gelagert und zusammen mit diesem um die Spindelachse rotierbar ist. Dies gibt die Möglichkeit, das Drehteil um seine Drehachse in Drehung zu versetzen, indem es zusammen mit dem Trägerteil um die Spindelachse rotiert, wobei es an einem Maschinenteil der Werkzeugmaschine anliegt. Es kann allerdings auch vorgesehen sein, daß das am Trägerteil gelagerte Drehteil mit einem Maschinenteil zusammenwirkt, das seinerseits um die Spindelachse rotierbar ist. Darauf wird nachfolgend noch näher eingegangen.

Bei einer bevorzugten Ausführungsform ist das Drehteil als Drehzapfen ausgestaltet, der über eine obere Stirnseite des Trägerteils hervorsteht.

Bei einer kostengünstig herstellbaren Ausführungsform ist das Drehteil am Maschinenteil der Werkzeugmaschine abrollbar. Durch eine Abrollbewegung des Drehteils kann dieses um seine Drehachse in Drehung versetzt werden. Die Abrollbewegung kann beispielsweise dadurch erzeugt werden, daß das Maschinenteil um die Spindelachse rotierbar ist, wobei die Drehbewegung des Maschinenteils auf das an ihm anliegende Drehteil übertragen wird.

Bei einer besonders bevorzugten Ausführungsform ist das Drehteil durch Rotation des Trägerteils am Maschinenteil abrollbar. Das Maschinenteil kann somit ortsfest gehalten sein, und das Drehteil rollt sich am ortsfesten Maschinenteil ab, wenn das Trägerteil in Rotation versetzt wird. Auch in diesem Fall wird eine Drehbewegung des Drehteils um seine Drehachse erzeugt, und diese Bewegung wird über das Getriebe auf die Werkzeugaufnahme übertragen zum Verschwenken derselben um die senkrecht zur Spindelachse ausgerichtete Schwenkachse.

Von Vorteil ist es, wenn bei an der Spindel angeordnetem Werkzeugaggregat das Drehteil und das Maschinenteil relativ zueinander versetzbar sind zum wahlweisen Herstellen und Lösen der Verbindung zwischen Drehteil und Maschinenteil. Soll die Werkzeugaufnahme lediglich um die Spindelachse rotiert werden, so kann die Kopplung zwischen dem Drehteil und dem Maschinenteil entfallen, die Bewegung der Werkzeugaufnahme wird dann lediglich durch eine Rotation des Trägerteils bewirkt. Soll die Werkzeugaufnahme jedoch um ihre Schwenkachse verschwenkt werden, so wird das Drehteil mit dem Maschinenteil gekoppelt, beispielsweise dadurch, daß die beiden Teile in unmittelbare Anlage aneinander gebracht werden. Hierzu kann vorgesehen sein, daß das Drehteil relativ zum Maschinenteil versetzbar gehalten ist. Von Vorteil ist es jedoch, wenn das Maschinenteil in Richtung auf das Drehteil versetzt werden kann. Zum Beispiel kann vorgesehen sein, daß das Maschinenteil zwischen einer zum Werkzeugaggregat beabstandeten oberen Stellung und einer dem Werkzeugaggregat angenäherten unteren Stellung hin und her verschiebbar gehalten ist. Zur Herstellung einer Kopplung zwischen dem Maschinenteil und dem Drehteil ist es dann lediglich erforderlich, das Maschinenteil in seine untere Stellung zu verschieben, in der es in einer bevorzugten Ausführungsform unmittelbar am Drehteil anliegt. Zum Entkoppeln kann das Maschinenteil in seine obere Stellung überführt werden.

Es kann vorgesehen sein, daß das Maschinenteil einen konzentrisch zur Spindelachse angeordneten Ring ausbildet mit einer Anlagefläche, an die das Drehteil anlegbar ist. Die Anlagefläche kann beispielsweise an einer Innenseite oder einer Außenseite des Ringes angeordnet sein.

Von Vorteil ist es, wenn das Drehteil mit dem Maschinenteil reibschlüssig verbindbar ist. Eine derartige Ausgestaltung hat den Vorteil, daß das Drehteil in jeder beliebigen Drehstellung bezogen auf die Spindelachse mit dem Maschinenteil gekoppelt werden kann.

Wie bereits erläutert, ist das Drehteil mit dem Maschinenteil verbindbar. Die Verbindung kann über ein oder mehrere Verbindungsteile erfolgen. Von Vorteil ist es, wenn das Drehteil an eine Anlagefläche des Maschinenteils anlegbar ist. Die Anlagefläche kann beispielsweise konisch ausgebildet oder konkav oder konvex gekrümmt sein.

Bei einer vorteilhaften Ausführungsform der Erfindung ist das Drehteil formschlüssig mit dem Maschinenteil verbindbar, beispielsweise über eine Verzahnung, insbesondere eine konische Verzahnung.

Günstig ist es, wenn bei an der Spindel angeordnetem Werkzeugaggregat das Drehteil und das Maschinenteil unlösbar miteinander verbunden sind und das Maschinenteil wahlweise zusammen mit dem Trägerteil oder relativ zum Trägerteil bewegbar ist. Bei einer derartigen Ausführungsform ist das Drehteil permanent mit dem Maschinenteil gekoppelt. Soll die Werkzeugaufnahme lediglich um die Spindelachse gedreht werden, so wird das Trägerteil in Rotation versetzt, wobei das Maschinenteil eine entsprechende Bewegung ausführt. Mangels Relativbewegung zwischen Träger- und Maschinenteil behält dann das Drehteil seine aktuelle Drehstellung bezogen auf seine Drehachse bei, so daß sichergestellt ist, daß die Werkzeugaufnahme beim Drehen um die Spindelachse ihre Schwenkstellung nicht verändert. Soll die Werkzeugaufnahme jedoch um die Schwenkachse verschwenkt werden, so wird das Maschinenteil relativ zum Trägerteil bewegt. Aufgrund der sich dann einstellenden Relativbewegung zwischen Träger- und Maschinenteil wird das Drehteil um seine Drehachse in Drehung versetzt zum Verschwenken der Werkzeugaufnahme. Dies gibt insbesondere die Möglichkeit, die Werkzeugaufnahme bei fester Drehstellung relativ zur Spindelachse zu verschwenken. Selbstverständlich kann auch eine überlagerte Dreh- und Schwenkbewegung der Werkzeugaufnahme durchgeführt werden, indem sowohl das Trägerteil als auch das Maschinenteil bewegt werden, wobei die beiden Teile eine asynchrone Bewegung ausführen.

Das Maschinenteil kann beispielsweise einen um seine Längsachse in Drehung versetzbaren Antriebszapfen aufweisen, der mit dem Drehteil verbindbar ist. Der Antriebszapfen kann parallel zur Spindelachse ausgerichtet sein.

Zur Kopplung des Drehteils mit dem Antriebszapfen ist es von Vorteil, wenn das Drehteil mit dem Antriebszapfen formschlüssig verbindbar ist. So kann beispielsweise vorgesehen sein, daß das Drehteil oder der Antriebszapfen ein keilförmiges Endstück aufweist, das in eine korrespondierend ausgestaltete Aufnahme des Antriebszapfens bzw. des Drehteils eintaucht. Das Drehteil kann hierbei in Form eines Drehzapfens ausgestaltet sein, wobei es von Vorteil ist, wenn der Drehzapfen in Richtung auf den Antriebszapfen justierbar gehalten ist, denn dadurch kann ein spielfreies Zusammenwirken von Drehteil und Antriebszapfen auf konstruktiv einfache Weise erzielt werden.

Bei einer besonders bevorzugten Ausführungsform kämmt der Antriebszapfen mit einem Zahnrad der Werkzeugmaschine, das um eine koaxial zur Spindelachse ausgerichtete Drehachse verdrehbar ist. Dies gibt die Möglichkeit, das Zahnrad synchron oder asynchron zum Trägerteil des Werkzeugaggregats zu verdrehen, um die Werkzeugaufnahme wahlweise um die Spindelachse zu rotieren und/oder um die Schwenkachse zu verschwenken. Bevorzugt steht der Antriebszapfen über eine konische Verzahnung mit dem Zahnrad in formschlüssiger Verbindung.

Von besonderem Vorteil ist es, wenn der Antriebszapfen an einem Verstellteil der Werkzeugmaschine drehbar gelagert ist, das um eine koaxial zur Spindelachse ausgerichtete Drehachse drehbar ist, wobei das Trägerteil des Werkzeugaggregates mit dem Verstellteil der Werkzeugmaschine drehfest verbindbar ist. Das Verstellteil kann von der Werkzeugmaschine in Drehung versetzt werden, und durch die Kopplung des Trägerteils mit dem Verstellteil kann das Trägerteil zusammen mit der Werkzeugaufnahme ebenfalls um die Spindelachse rotiert werden. Der Antriebszapfen ist bei einer derartigen Ausführungsform am Verstellteil drehbar gelagert und kann einerseits mit dem Drehteil des Werkzeugaggregats und andererseits mit einem relativ zum Verstellteil verdrehbaren Maschinenteil gekoppelt werden, beispielsweise mit dem voranstehend erläuterten Zahnrad. Je nachdem, ob das Zahnrad synchron oder asynchron zum Verstellteil bewegt wird, kann die Werkzeugaufnahme um die Spindelachse verdreht oder um die Schwenkachse verschwenkt werden.

Die nachfolgende Beschreibung zweier bevorzugter Ausführungsformen der Erfindung dient im Zusammenhang mit der Zeichnung der näheren Erläuterung. Es zeigen:
- Figur 1:: eine perspektivische Darstellung einer ersten Ausführungsform eines erfindungsgemäßen Werkzeugaggregats, das an der Spindel einer Werkzeugmaschine angeordnet ist;
- Figur 2:: eine teilweise geschnitten dargestellte Seitenansicht des Werkzeugaggregats aus Figur 1 mit einer Werkzeugaufnahme in einer ersten und einer gestrichelt dargestellten zweiten Schwenkstellung;
- Figur 3:: eine perspektivische Darstellung einer zweiten Ausführungsform eines erfindungsgemäßen Werkzeugaggregats, das an der Spindel einer Werkzeugmaschine angeordnet ist; und
- Figur 4:: eine teilweise geschnitten dargestellte Seitenansicht des Werkzeugaggregats aus Figur 3.

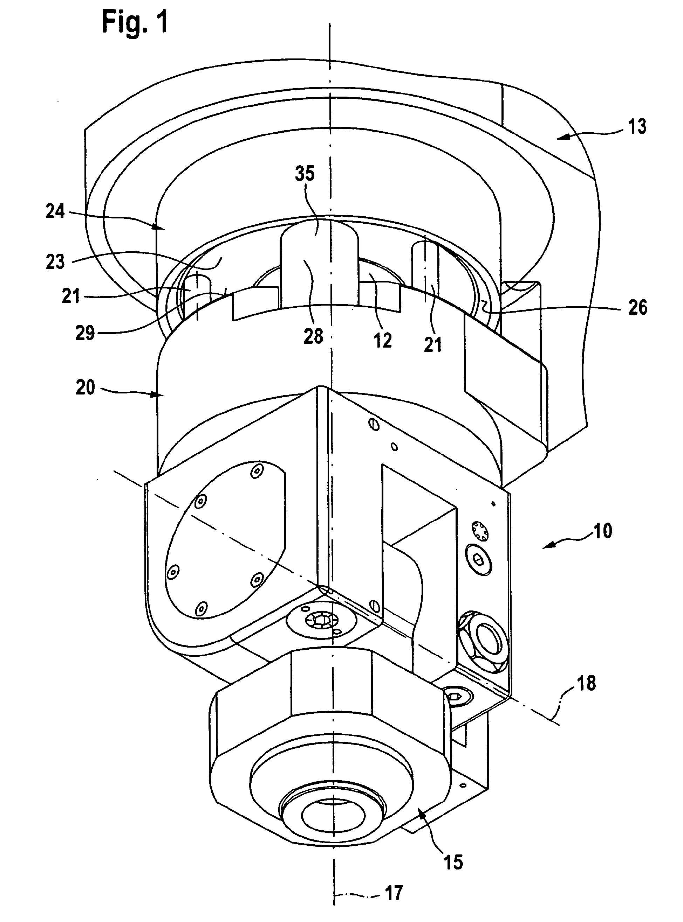

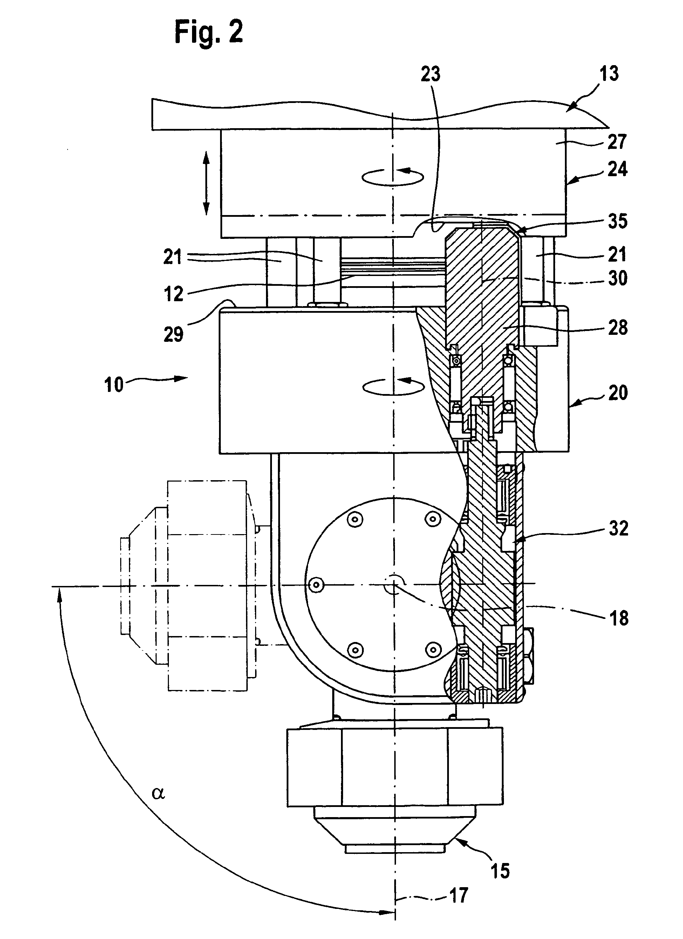

In den Figuren 1 und 2 ist eine erste Ausführungsform eines insgesamt mit dem Bezugszeichen 10 belegten Werkzeugaggregats dargestellt, das an einer Spindel 12 einer in der Zeichnung nur angedeuteten Werkzeugmaschine 13 angeordnet ist. Das Werkzeugaggregat 10 umfaßt eine Werkzeugaufnahme 15, die um eine senkrecht zur Spindelachse 17 ausgerichtete Schwenkachse 18 verschwenkbar an einem Trägerteil 20 des Werkzeugaggregats 10 gehalten ist. Das Trägerteil 20 ist mittels Bolzen 21 drehfest an einem um die Spindelachse 17 rotierbaren Verstellteil 23 der Werkzeugmaschine 13 gehalten. Das Verstellteil 23 ist von einem Maschinenring 24 umgeben, der zwischen einer in Figur 2 in durchgezogener Linie dargestellten unteren, dem Werkzeugaggregat 10 angenäherten Stellung und einer in Figur 2 strichpunktiert dargestellten oberen, zum Werkzeugaggregat 10 beabstandeten Stellung parallel zur Spindelachse 17 hin und her verschiebbar ist. Eine Innenseite 26 des Maschinenrings 24 ist konisch ausgebildet und stellt eine Anlagefläche dar für ein Drehteil des Werkzeugaggregats 10 in Form eines Drehzapfens 28, der über die obere, der Werkzeugaufnahme 10 abgewandte Stirnseite 29 des Trägerteils 20 hervorsteht und um seine Längsachse 30 drehbar am Trägerteil 20 gelagert ist. Über ein Getriebe 32 des Werkzeugaggregats 10 steht der Drehzapfen 28 mit der Werkzeugaufnahme 15 in Wirkverbindung. Wird der Drehzapfen um seine Längsachse in Drehung versetzt, so wird dadurch die Werkzeugaufnahme 15 um die Schwenkachse 18 verschwenkt.

In Figur 2 ist die Werkzeugaufnahme 10 in durchgezogener Linie in einer Stellung fluchtend zur Spindelachse 17 dargestellt, und gestrichelt ist die Werkzeugaufnahme 15 in einer senkrecht zur Spindelachse 17 ausgerichteten Schwenkstellung illustriert. In einem Schwenkwinkelbereich α von mehr als 90°, insbesondere ca. 100°, bezogen auf die Spindelachse 17 kann die Werkzeugaufnahme 15 jede beliebige Schwenkstellung relativ zur Spindelachse 17 einnehmen, indem der Drehzapfen 28 um seine Längsachse 30 in Drehung versetzt wird. Es kann auch vorgesehen sein, daß die Werkzeugaufnahme 15 beidseitig zur Spindelachse 17, insbesondere in einem Schwenkwinkelbereich von ca. ± 100°, verschwenkbar ist.

Der Drehantrieb des Drehzapfens 28 erfolgt durch Reibschluß mit der Innenseite 26 des Maschinenrings 24. Ein freier Endbereich des Drehzapfens 28 bildet hierzu ein konisch ausgestaltetes Endstück 35 aus, das mit seiner Mantelfläche an der konischen Innenseite 26 des Maschinenrings 24 anliegt, wenn der Maschinenring 24 seine untere Stellung einnimmt. Wird in dieser Stellung das Trägerteil 20 vom Verstellteil 23 der Werkzeugmaschine 13 um die Spindelachse 17 in Drehung versetzt, so rollt sich der Drehzapfen 28 an der konischen Innenseite 26 des Maschinenrings 24 ab, der Drehzapfen wird dadurch um seine Längsachse 30 in Drehung versetzt zum Verschwenken der Werkzeugaufnahme 15. Hat die Werkzeugaufnahme 15 eine vorgegebene Schwenkstellung eingenommen, so wird der Maschinenring 24 in seine obere Stellung überführt, in der die konische Innenseite 26 einen Abstand zum Endstück 35 des Drehzapfens 28 einnimmt. Eine Rotation des Trägerteils 20 um die Spindelachse 17 hat dann keine Drehbwegung des Drehzapfens 28 zur Folge, die Werkzeugaufnahme 15 verharrt daher in ihrer eingenommenen Schwenkstellung, in der sie von dem selbst hemmenden Getriebe 32 gehalten wird. Statt einer Anlage des Drehzapfens 28 an der Innenseite 26 kann alternativ auch eine Anlage an der Außenseite 27 des Maschinenrings 24 vorgesehen sein, indem der Drehzapfen 28 bezogen auf seine in den Figuren 1 und 2 dargestellte Stellung radial nach außen versetzt angeordnet wird.

Soll die Werkzeugaufnahme 15 erneut verschwenkt werden, so muß hierzu lediglich das Maschinenteil 24 in seine untere Stellung überführt und anschließend das Trägerteil 20 in Rotation versetzt werden. Eine Schwenkbewegung der Werkzeugaufnahme 15 kann demzufolge in jeder beliebigen Drehstellung des Trägerteils 20 erfolgen. Eine vorherige Ausrichtung des Drehzapfens 28 in eine bestimmte Drehstellung relativ zur Spindelachse 17 ist nicht erforderlich.

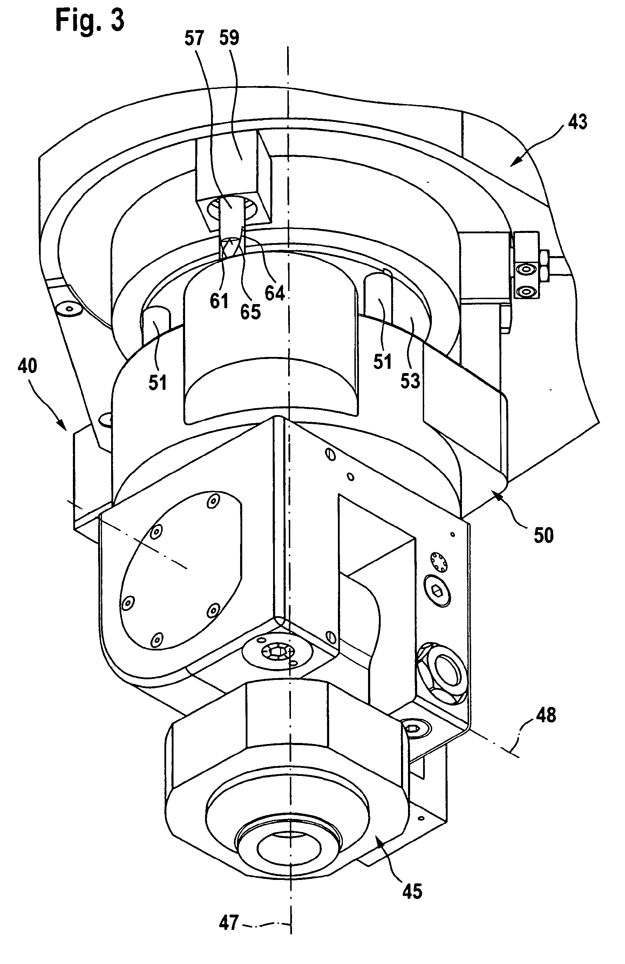

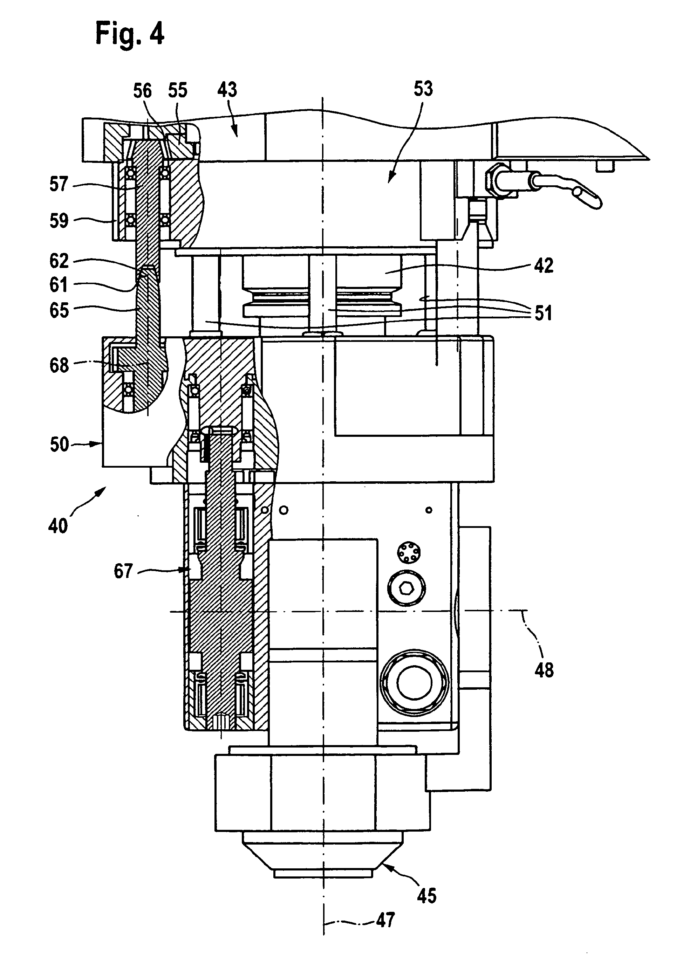

In den Figuren 3 und 4 ist eine zweite Ausführungsform eines erfindungsgemäßen Werkzeugaggregats dargestellt, das insgesamt mit dem Bezugszeichen 40 belegt ist. Dieses ist an der Spindel 42 einer Werkzeugmaschine 43 angeordnet und umfaßt eine Werkzeugaufnahme 45, die um eine senkrecht zur Spindelachse 47 ausgerichtete Schwenkachse 48 verschwenkbar an einem Trägerteil 50 des Werkzeugaggregats 40 gelagert ist. Das Trägerteil 50 ist mittels Bolzen 51 drehfest an einem Verstellteil 53 der Werkzeugmaschine 43 gehalten. Das Verstellteil 53 kann von der Werkzeugmaschine 50 in Rotation versetzt werden, so daß das Trägerteil 50 zusammen mit der Werkzeugaufnahme 45 um die Spindelachse 47 rotiert.

Oberhalb des Verstellteils 53 weist die Werkzeugmaschine 43 ein Zahnrad 55 auf, das von der Werkzeugmaschine 43 unabhängig vom Verstellteil 53 um die Spindelachse 47 verdreht werden kann und das über eine konische Verzahnung 56 mit einem Antriebszapfen 57 der Werkzeugmaschine 43 in Verbindung steht. Der Antriebszapfen 57 ist parallel zur Spindelachse 47 ausgerichtet und ist in einem Ausleger 59 des Verstellteils 53 drehbar gelagert. Er steht in Richtung auf das Trägerteil 50 über den Ausleger 59 hervor und weist an seiner dem Trägerteil 50 zugewandten Stirnseite 61 eine Aufnahme 62 auf. In die Aufnahme 62 taucht ein keilförmiges Endstück 64 eines Drehzapfens 65 ein, der fluchtend zum Antriebszapfen 57 ausgerichtet und im Trägerteil 50 drehbar gelagert ist. Mittels einer in der Zeichnung nicht dargestellten, an sich bekannten Justierhilfe kann der Drehzapfen 65 relativ zum Antriebszapfen 57 justiert werden zur Sicherstellung einer spielfreien Kopplung zwischen dem Drehzapfen 65 und dem Antriebszapfen 57.

Der Drehzapfen 65 steht über ein selbst hemmendes Getriebe 67 mit der Werkzeugaufnahme 45 in Wirkverbindung und kann vom Antriebszapfen 57 um seine Längsachse 68 in Drehung versetzt werden.

Soll die Werkzeugaufnahme 45 lediglich um die Spindelachse 47 rotiert werden, so wird hierzu das Trägerteil 50 vom Verstellteil 53 der Werkzeugmaschine 43 in Drehung versetzt, wobei das Zahnrad 55 eine Drehbewegung synchron zur Bewegung des Trägerteils 50 ausführt. Dies hat zur Folge, daß der Antriebszapfen 57 und der Drehzapfen 65 ihre Drehstellung bezogen auf die Längsachse 68 beibehalten. Dies stellt sicher, daß auch die Werkzeugaufnahme 45 ihre aktuelle Schwenkstellung beibehält während ihrer Rotation um die Spindelachse 47.

Soll die Werkzeugaufnahme 45 um die Schwenkachse 48 verschwenkt werden, so wird hierzu das Zahnrad 55 zu einer asynchronen Bewegung relativ zum Verstellteil 53 angetrieben, insbesondere kann vorgesehen sein, daß das Verstellteil 53 seine aktuelle Drehstellung beibehält und lediglich das Zahnrad 55 und über dieses der Antriebszapfen 57 und der Drehzapfen 65 in Drehung versetzt werden zum Verschwenken der Werkzeugaufnahme 45. Letztere kann somit eine Schwenkbewegung ausführen unabhängig von einer Rotation um die Spindelachse 47. Es ist jedoch auch eine überlagerte Rotations- und Schwenkbewegung möglich, indem sowohl das Verstellteil 53 als auch das Zahnrad 55 von der Werkzeugmaschine 43 in Drehung versetzt werden, wobei sie jedoch eine asynchrone Bewegung ausführen. Dadurch kann die Werkzeugaufnahme 45 um die Spindelachse 47 rotiert und gleichzeitig um die Schwenkachse 48 verschwenkt werden.

## Patentansprüche

1. Einwechselbares Werkzeugaggregat zur Anordnung an der Spindel einer Werkzeugmaschine, mit einem koaxial zur Spindelachse rotierbaren Trägerteil, an dem eine Werkzeugaufnahme um eine senkrecht zur Spindelachse ausgerichtete Schwenkachse verschwenkbar gelagert ist, und mit einer Schwenkmechanik, die mit der Werkzeugaufnahme gekoppelt ist zum Verschwenken der Werkzeugaufnahme, **dadurch gekennzeichnet, daß** die Schwenkmechanik ein Drehteil (28; 65) aufweist, das um eine parallel zur Spindelachse (17; 47) ausgerichtete Drehachse (30; 68) drehbar gelagert und über ein Getriebe (32; 67) mit der Werkzeugaufnahme (15; 45) gekoppelt ist, wobei das Drehteil (28; 65) mit einem Maschinenteil (24; 57) verbindbar und durch eine Relativbewegung zwischen dem Trägerteil (20; 50) und dem Maschinenteil (24; 57) um seine Drehachse (30; 68) in Drehung versetzbar ist.

2. Werkzeugaggregat nach Anspruch 1, **dadurch gekennzeichnet, daß** das Drehteil (28; 65) am Trägerteil (20; 50) gelagert und zusammen mit dem Trägerteil (20; 50) um die Spindelachse (17; 47) rotierbar ist.

3. Werkzeugaggregat nach Anspruch 1 oder 2, **dadurch gekennzeichnet, daß** das Drehteil als Drehzapfen (28; 65) ausgestaltet ist, der über eine obere Stirnseite (29) des Trägerteils (20; 50) hervorsteht.

4. Werkzeugaggregat nach Anspruch 1, 2 oder 3, **dadurch gekennzeichnet, daß** das Drehteil (28) am Maschinenteil (24) abrollbar ist.

5. Werkzeugaggregat nach Anspruch 4, **dadurch gekennzeichnet, daß** das Drehteil (28) durch Rotation des Trägerteils (20) am Maschinenteil (24) abrollbar ist.

6. Werkzeugaggregat nach Anspruch 4 oder 5, **dadurch gekennzeichnet, daß** bei an der Spindel (12) angeordnetem Werkzeugaggregat (10) das Drehteil (28) und das Maschinenteil (24) relativ zueinander versetzbar sind zum wahlweisen Herstellen und Lösen der Verbindung zwischen dem Drehteil (28) und dem Maschinenteil (24).

7. Werkzeugaggregat nach Anspruch 4, 5 oder 6, **dadurch gekennzeichnet, daß** das Maschinenteil einen konzentrisch zur Spindelachse (17) angeordneten Ring (24) ausbildet mit einer Anlagefläche (26), an die das Drehteil (28) anlegbar ist.

8. Werkzeugaggregat nach einem der voranstehenden Ansprüche, **dadurch gekennzeichnet, daß** das Drehteil (28) mit dem Maschinenteil (24) reibschlüssig verbindbar ist.

9. Werkzeugaggregat nach einem der voranstehenden Ansprüche, **dadurch gekennzeichnet, daß** das Drehteil (28; 65) an eine Anlagefläche (26) des Maschinenteils (24) anlegbar ist.

10. Werkzeugaggregat nach einem der voranstehenden Ansprüche, **dadurch gekennzeichnet, daß** das Drehteil (65) mit dem Maschinenteil (57) formschlüssig verbindbar ist.

11. Werkzeugaggregat nach einem der voranstehenden Ansprüche, **dadurch gekennzeichnet, daß** bei an der Spindel (42) angeordnetem Werkzeugaggregat (40) das Drehteil (65) und das Maschinenteil (57) unlösbar miteinander verbunden sind und das Maschinenteil (57) wahlweise zusammen mit dem Trägerteil (50) oder relativ zum Trägerteil (50) bewegbar ist.

12. Werkzeugaggregat nach Anspruch 11, **dadurch gekennzeichnet, daß** das Maschinenteil einen um seine Längsachse in Drehung versetzbaren Antriebszapfen (57) aufweist, der mit dem Drehteil (65) verbindbar ist.

13. Werkzeugaggregat nach Anspruch 12, **dadurch gekennzeichnet, daß** das Drehteil (65) mit dem Antriebszapfen (57) formschlüssig verbindbar ist.

14. Werkzeugaggregat nach Anspruch 13, **dadurch gekennzeichnet, daß** das Drehteil (65) oder der Antriebszapfen ein keilförmiges Endstück (64) aufweist, das in eine korrespondierend ausgestaltete Aufnahme (62) des Antriebszapfens (57) bzw. des Drehteils (65) eintaucht.

15. Werkzeugaggregat nach Anspruch 12, 13 oder 14, **dadurch gekennzeichnet, daß** der Antriebszapfen (57) mit einem Zahnrad (55) der Werkzeugmaschine (43) kämmt, das um eine koaxial zur Spindelachse (47) ausgerichtete Drehachse verdrehbar ist.

16. Werkzeugaggregat nach Anspruch 15, **dadurch gekennzeichnet, daß** der Antriebszapfen (57) an einem Verstellteil (53) der Werkzeugmaschine (43) drehbar gelagert ist, das um eine koaxial zur Spindelachse (47) ausgerichtete Drehachse drehbar ist, wobei das Trägerteil (50) mit dem Verstellteil (53) drehfest verbindbar ist.

## Claims

1. Changeable tool unit for arranging on the spindle of a machine tool, having a carrier member which can be rotated coaxially relative to the spindle axis and on which a tool receiving member is supported so as to be pivotable about a pivot axis orientated perpendicularly relative to the spindle axis, and having a pivot mechanism which is connected to the tool receiving member in order to pivot the tool receiving member, **characterised in that** the pivot mechanism has a rotary member (28;65) which is supported so as to be rotatable about an axis of rotation (30;68) which is orientated parallel with the spindle axis (17;47) and which is connected to the tool receiving member (15;45) via a transmission (32; 67), with the rotary member (28;65) being able to be connected to a machine member (24;57) and being able to be rotated about the axis of rotation (30;68) thereof by a relative movement between the carrier member (20;50) and the machine member (24;57)

2. Tool unit according to claim 1, **characterised in that** the rotary member (28;65) is supported on the carrier member (20;50) and can be rotated about the spindle axis (17;47) together with the carrier member (20;50).

3. Tool unit according to claim 1 or 2, **characterised in that** the rotary member is constructed as a pivot pin (28;65) which protrudes beyond an upper end face (29) of the carrier member (20;50).

4. Tool unit according to claim 1, 2 or 3, **characterised in that** the rotary member (28) can be rolled on the machine member (24).

5. Tool unit according to claim 4, **characterised in that** the rotary member (28) is able to be rolled on the machine member (24) by the carrier member (20) being rotated.

6. Tool unit according to claim 4 or 5, **characterised in that**, when the tool unit (10) is arranged on the spindle (12), the rotary member (28) and the machine member (24) can be displaced relative to each other for the optional engagement and disengagement of the connection between the rotary member (28) and the machine member (24).

7. Tool unit according to claim 4, 5 or 6, **characterised in that** the machine member forms a ring (24) which is arranged concentrically relative to the spindle axis (17) and which has an abutment face (26), against which the rotary member (28) can be positioned.

8. Tool unit according to any one of the preceding claims, **characterised in that** the rotary member (28) can be connected to the machine member (24) in a frictionally engaged manner.

9. Tool unit according to any one of the preceding claims, **characterised in that** the rotary member (28; 65) can be positioned against an abutment face (26) of the machine member (24).

10. Tool unit according to any one of the preceding claims, **characterised in that** the rotary member (65) can be connected to the machine member (57) in a positive-locking manner.

11. Tool unit according to any one of the preceding claims, **characterised in that**, when the tool unit (40) is arranged on the spindle (42), the rotary member (65) and the machine member (57) are connected to each other in a non-disengageable manner and the machine member (57) can optionally be moved together with the carrier member (50) or relative to the carrier member (50).

12. Tool unit according to claim 11, **characterised in that** the machine member has a drive stud (57) which can be rotated about the longitudinal axis thereof and which can be connected to the rotary member (65) .

13. Tool unit according to claim 12, **characterised in that** the rotary member (65) can be connected to the drive stud (57) in a positive-locking manner.

14. Tool unit according to claim 13, **characterised in that** the rotary member (65) or the drive stud has a wedge-like end piece (64) which is introduced into a correspondingly formed receiving member (62) of the drive stud (57) or the rotary member (65).

15. Tool unit according to claim 12, 13 or 14, **characterised in that** the drive stud (57) engages with a toothed wheel (55) of the machine tool (43), which toothed wheel (55) can be rotated about an axis of rotation which is orientated coaxially relative to the spindle axis (47).

16. Tool unit according to claim 15, **characterised in that** the drive stud (57) is rotatably supported on a positioning member (53) of the machine tool (43), which positioning member (53) can be rotated about an axis of rotation which is orientated coaxially relative to the spindle axis (47), with the carrier member (50) being connected to the positioning member (53) in a rotationally secure manner.

## Revendications

1. Tête d'outil amovible destinée à être placée sur la broche d'une machine-outil, ladite tête d'outil comportant une pièce de support, qui est apte à tourner coaxialement à l'axe de la broche et sur laquelle est monté un raccordement d'outil pouvant pivoter autour d'un axe de pivotement orienté perpendiculairement à l'axe de la broche, et une mécanique de pivotement qui est couplée au raccordement d'outil afin de faire pivoter ledit raccordement d'outil, **caractérisée en ce que** la mécanique de pivotement comporte une pièce rotative (28 ; 65) qui est montée de façon à pouvoir tourner autour d'un axe de rotation (30 ; 68) orienté parallèlement à l'axe (17 ; 47) de la broche, et qui est couplée au raccordement d'outil (15 ; 45) par l'intermédiaire d'une transmission (32 ; 67), ladite pièce rotative (28 ; 65) pouvant être reliée à une pièce de machine (24 ; 57) et pouvant être déplacée en rotation autour de son axe de rotation (30 ; 68) par un mouvement relatif entre la pièce de support (20 ; 50) et la pièce de machine (24 ; 57).

2. Tête d'outil selon la revendication 1, **caractérisée en ce que** la pièce rotative (28 ; 65) est montée sur la pièce de support (20 ; 50) et peut tourner autour de l'axe (17 ; 47) de la broche conjointement avec la pièce de support (20 ; 50).

3. Tête d'outil selon la revendication 1 ou 2, **caractérisée en ce que** la pièce rotative est conformée en pivot (28 ; 65) qui fait saillie au-dessus d'un côté frontal supérieur (29) de la pièce de support (20 ; 50).

4. Tête d'outil selon la revendication 1, 2 ou 3, **caractérisée en ce que** la pièce rotative (28) est apte à rouler sur la pièce de machine (24).

5. Tête d'outil selon la revendication 4, **caractérisée en ce que** la pièce rotative (28) est apte à rouler sur la pièce de machine (24) par rotation de la pièce de support (20).

6. Tête d'outil selon la revendication 4 ou 5, **caractérisée en ce que**, lorsqu'une tête d'outil (10) est placée sur la broche (12), la pièce rotative (28) et la pièce de machine (24) peuvent être déplacées l'une par rapport à l'autre de façon à établir ou à supprimer au choix la liaison entre la pièce rotative (28) et la pièce de machine (24).

7. Tête d'outil selon la revendication 4, 5 ou 6, **caractérisée en ce que** la pièce de machine forme une bague (24) qui est agencée concentriquement à l'axe (17) de la broche, et qui présente une surface d'appui (26) sur laquelle appuie la pièce rotative (28).

8. Tête d'outil selon l'une des revendications précédentes, **caractérisée en ce que** la pièce rotative (28) peut être reliée par une liaison à friction à la pièce de machine (24).

9. Tête d'outil selon l'une des revendications précédentes, **caractérisée en ce que** la pièce rotative (28 ; 65) peut appuyer contre une surface d'appui (26) de la pièce de machine (24).

10. Tête d'outil selon l'une des revendications précédentes, **caractérisée en ce que** la pièce rotative (65) peut être reliée par une liaison à complémentarité de formes à la pièce de machine (57).

11. Tête d'outil selon l'une des revendications précédentes, **caractérisée en ce que**, lorsqu'une tête d'outil (40) est placée sur la broche (42), la pièce rotative (65) et la pièce de machine (57) sont reliées entre elles de façon inamovible, et la pièce de machine (57) peut être déplacée au choix conjointement avec la pièce de support (50) ou par rapport à la pièce de support (50).

12. Tête d'outil selon la revendication 11, **caractérisée en ce que** la pièce de machine comporte une cheville d'entraînement (57) qui peut être déplacée en rotation autour de son axe longitudinal, et qui peut être reliée à la pièce rotative (65).

13. Tête d'outil selon la revendication 12, **caractérisée en ce que** la pièce rotative (65) peut être reliée par une liaison à complémentarité de formes à la cheville d'entraînement (57).

14. Tête d'outil selon la revendication 13, **caractérisée en ce que** la pièce rotative (65) ou la cheville d'entraînement comporte une pièce d'extrémité cunéiforme (64) qui pénètre dans un logement (62), de conformation correspondante, de la cheville d'entraînement (57) ou de la pièce rotative (65).

15. Tête d'outil selon la revendication 12, 13 ou 14, **caractérisée en ce que** la cheville d'entraînement (57) s'engrène avec une roue dentée (55) de la machine-outil (43), laquelle roue dentée est apte à tourner autour d'un axe de rotation orienté coaxialement à l'axe (47) de la broche.

16. Tête d'outil selon la revendication 15, **caractérisée en ce que** la cheville d'entraînement (57) est montée, de façon à pouvoir tourner, sur une pièce de réglage (53) de la machine-outil, laquelle pièce de réglage est apte à tourner autour d'un axe de rotation orienté coaxialement à l'axe (47) de la broche, la pièce de support (50) pouvant être reliée, sans pouvoir tourner, à la pièce de réglage (53).
